Europäisches Patentamt

European Patent Office

Office européen des brevets

(19)

(11) **EP 1 429 289 A1**

(12) **DEMANDE DE BREVET EUROPEEN**

(43) Date de publication:
  **16.06.2004  Bulletin 2004/25**

(51) Int Cl.⁷: **G06T 5/50**, G06T 7/00,
                 G06T 5/00, G06T 7/20

(21) Numéro de dépôt: **02293073.9**

(22) Date de dépôt: **12.12.2002**

(84) Etats contractants désignés:
  **AT BE BG CH CY CZ DE DK EE ES FI FR GB GR
  IE IT LI LU MC NL PT SE SI SK TR**
  Etats d'extension désignés:
  **AL LT LV MK RO**

(71) Demandeur: **EADS ASTRIUM SAS
  78140 Velizy-Villacoublay (FR)**

(72) Inventeur: **Boulogne, Laurent
  31570 Sainte Foy d'Aigrefeuille (FR)**

(74) Mandataire: **Loisel, Bertrand et al
  Cabinet Plasseraud
  65/67 rue de la Victoire
  75440 Paris Cedex 09 (FR)**

(54) **Procede et dispositif de traitement hybride d'image**

(57)  Le procédé permet de traiter une image ou des images successives d'une scène comportant un fond structuré.

On effectue, sur chaque image ou séquence d'images, un traitement de registration anti-repliement à partir d'une estimation de fond et d'indication du décalage de la ligne de visée d'une image courante par rapport à une référence fixe ou correspondant à la ligne de visée de l'image de référence ; puis on effectue, sur l'image registrée, une opération de suppression de fond antirepliement par une nouvelle estimation de fond et soustraction en exploitant l'information sur le décalage de la ligne de visée de l'image courante.

FIG.1.

EP 1 429 289 A1

## Description

La présente invention concerne le traitement d'images uniques ou d'images successives d'une scène comportant un fond structuré sensiblement stationnaire dans sa structure (mais pouvant présenter un mouvement propre), en vue de pouvoir détecter une cible non résolue, mobile ou instationnaire.

On connaît déjà divers procédés et dispositifs remplissant cette fonction. Ils se prêtent mal à la détection dans un environnement défavorable, en particulier lorsque la cible présente un faible contraste par rapport au fond, lorsque le rapport signal à bruit est faible, lorsque la ligne de visée de l'appareil fournissant les images manque de stabilité et/ou lorsque le fond présente un mouvement propre.

Pour obtenir un rapport signal à bruit élevé, on utilise déjà des détecteurs matriciels (comportant une matrice bidimensionnelle de type CCD ou à pixels actifs) utilisés en pointage fixe ou avec plusieurs pointages successifs. Les détecteurs matriciels permettent d'obtenir des durées d'intégration sous l'action des photons bien supérieures à celles des détecteurs à barrettes. Le rapport signal à bruit s'en trouve augmenté.

Toutefois, l'augmentation de la durée d'intégration se heurte à divers problèmes, d'une part l'instabilité de la ligne de visée au cours d'une exposition (ou entre deux expositions successives) et l'instationnarité du fond de scène. Un bougé trop important des images gêne la suppression des fonds et, dans le cas du traitement de plusieurs images successives d'une séquence, gêne de façon notable la registration entre images successives.

La présente invention vise notamment à fournir un procédé et un dispositif permettant de réduire dans une large mesure les difficultés provoquées par l'instabilité de la ligne de visée, les mouvements apparents du fond et éventuellement les repliements de spectre dans les cas où les conditions de Shannon ne sont pas remplies.

Dans ce but, l'invention propose notamment un procédé de traitement d'une image ou d'images successives d'une scène comportant un fond structuré, suivant lequel, éventuellement après une extraction dans l'image ou les images d'une ou de vignettes de dimensions inférieures à celles de l'image, recalées pour être cadrées de façon sensiblement identique sur une zone d'intérêt prédéterminé :

on effectue, sur chaque image ou séquence d'images, un traitement de registration anti-repliement à partir d'une estimation de fond et d'indications du décalage de la ligne de visée de l'image courante par rapport à une référence fixe ou correspondant à la ligne de visée d'une image de référence, et

on effectue, sur l'image registrée, une opération de suppression de fond anti-repliement par une nouvelle estimation de fond et soustraction en exploitant l'information sur le décalage de la ligne de visée de l'image courante.

Dans le cas où le procédé de traitement est de type spatio-temporel et est appliqué à des images successives d'une même séquence, on effectuera sur chaque séquence un traitement de registration anti-repliement de restitution des décalages inter-images utilisant non seulement l'estimation du fond, mais aussi des informations de restitution de la ligne de visée, donnant une indication sur le décalage entre images successives.

L'invention propose également un dispositif de mise en oeuvre du procédé ci-dessus, comprenant un instrument opto-électronique dont l'organe photosensible est constitué par une matrice à deux dimensions de sites photo sensibles, munis de moyens fournissant une indication permettant de restituer à tout instant la ligne de visée, l'instrument opto-électronique étant d'un type fournissant des images numériques ou associées à un convertisseur analogique-numérique.

Les images ou vignettes filtrées obtenues par mise en oeuvre du procédé défini plus haut sont susceptibles de nombreuses utilisations, et notamment de la surveillance d'une zone afin de détecter l'apparition d'une cible se détachant sur le fond.

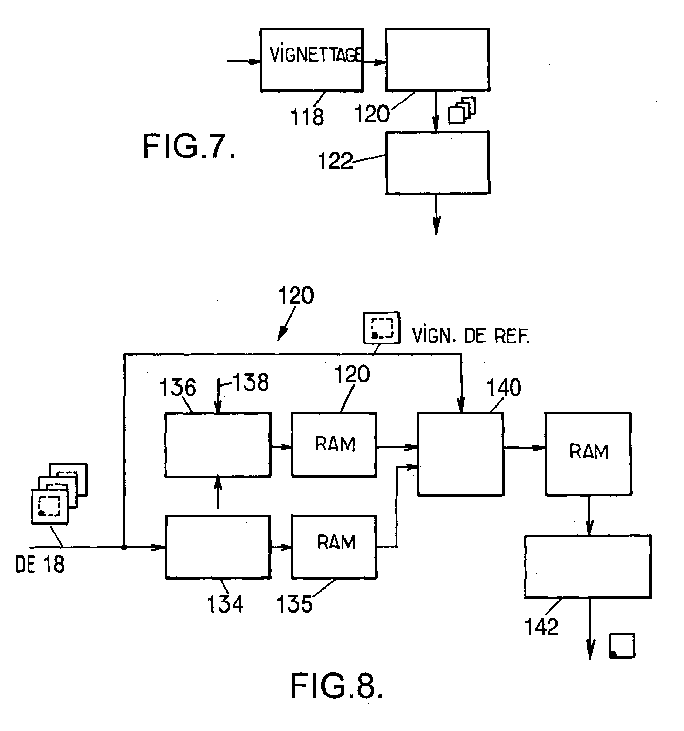

Le procédé suivant l'invention est applicable à des chaînes de traitement spatio-temporel classiques. Toutefois, l'invention, lorsqu'elle est appliquée à une séquence d'images, présente un intérêt tout particulier lorsqu'elle utilise les algorithmes de traitement spatio-temporels décrits dans la demande de brevet français FR 01 14934 à laquelle on pourra se reporter. Un exemple parmi les types de traitement envisagés dans cette demande est illustré en figures 7 à 9.

Dans le cas de la figure 7, des images complètes fournies par un instrument optoélectronique ou des vignettes extraites de ces images sont appliquées à une chaîne de traitement spatio-temporel 120 pouvant être suivie de moyens de détection de cible 122.

Le module de traitement spatio-temporel (figure 8) réalise simultanément deux fonctions:

- désensibilisation aux effets des repliements de spectre imposés par l'instrument opto-électronique,
- désensibilisation aux effets des mouvements inter-images imposés par l'instabilité de la ligne de visée et les mouvements propres des fonds.

Les traitements spatio-temporels intègrent des opérations de registration et de suppression de fond anti-repliement.

Les traitements exploitent une séquence d'images sur ce qu'on appellera un "horizon de visibilité" $Nh = [(Ns-)+1 +(Ns+)]$ images, c'est à dire :

- les Ns- images avant l'image de référence d'ordre i,
- l'image de référence sur laquelle on cherche à supprimer le fond,

- les Ns+ images après l'image de référence.

La mémorisation nécessaire pour les calculs est interne aux traitements.

On peut regarder la chaîne de traitement (fig. 8) comme comportant:

- des pré-traitements 134 sur les vignettes complètes extraites, (provenant de l'opération 132), dont le résultat est stocké temporairement dans une mémoire de travail 135,
- une registration anti-repliement 136 des vignettes, utilisant une information 138 donnant les décalages possibles,
- une suppression de fond anti- repliement 140 sur la vignette de référence i à chaque séquence,
- des post-traitements 142 sur les vignettes de référence, foumissant les vignettes utiles filtrées successives.

Ces opérations peuvent s'effectuer, comme on le verra plus loin, soit en restant dans l'espace direct, soit en passant dans l'espace fréquentiel.

Les pré-traitements 134 préparent les vignettes extraites en vue des opérations effectuées lors de la registration et de la suppression du fond. Les post-traitements 142 travaillent les vignettes filtrées avant diffusion aux traitements situés en aval.

Les post-traitements peuvent comporter des éventuelles transformations inverses de Fourier ainsi que des traitements de pondération temporelle, de filtrage spatial et d'élimination de la bordure des vignettes filtrées.

La registration anti-repliement 136 a pour objectif de restituer, malgré les repliements, les décalages inter-images.

La suppression de fond anti-repliement 140 a pour objectif de restituer puis de soustraire, malgré les repliements et les mouvements apparents, les fonds présents dans une vignette de référence en exploitant les vignettes registrées fournies par la registration anti-repliement136.

La registration 136 estime les décalages inter-images en exploitant, après un filtrage anti-repliement, les informations du fond non polluées par le repliement et estimées sur un support fréquentiel éventuellement étendu par fusion de N1 images.

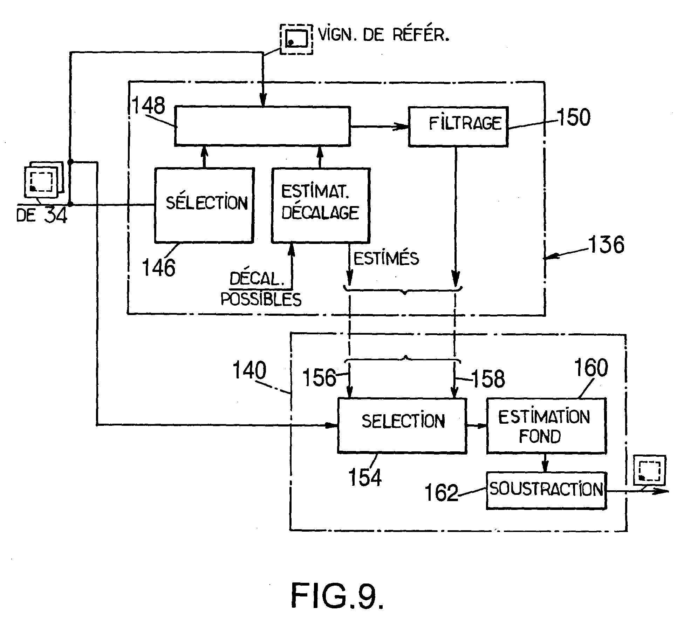

Les opérations de base de la registration anti-repliement 136 sont montrées en figure 9. Elles comportent:

- une étape 146 de sélection des images utilisées lors de l'estimation du fond,
- une étape 148 d'estimation du fond par fusion d'image(s) : cette estimation de fond peut aller de la simple interpolation d'une image (N1 = 1) à plusieurs fusions de N1 images sur un support fréquentiel étendu, (voir rubrique FISE) ; mais on a toujours N1 ≤ Nh:

- une étape 150 de filtrage anti-repliement,
- une étape 152 d'estimation du décalage de la vignette de référence, pouvant être le simple calcul du barycentre d'un maximum de corrélation.

La suppression de fond anti-repliement 140, également schématisée en figure 9, consiste à estimer puis à soustraire, dans chaque vignette de référence d'ordre i (extraite ou pré-traitée), le fond préalablement estimé dans un domaine spectral étendu (fusion d'un nombre N2 d'images supérieur à 1) et recalé grâce aux informations issues de la registration anti-repliement.

La suppression de fond anti-repliement 140 comprend, de façon générique :

- une sélection 154 parmi les vignettes prétraitées utilisant la sortie de la registration 136 (vignettes non repliées 156 et décalage estimé 158), une étape d'estimation du fond par fusion de N2 images
- une étape de soustraction du fond 162, fournissant une vignette de référence filtrée.

Suivant que l'on se trouve plus ou moins loin de la condition de Shannon, certaines opérations peuvent être prévues ou non et d'autres, telles que l'estimation du fond, peuvent être plus ou moins complexes.

L'invention propose également un dispositif suivant la revendication 10 permettant de mettre en oeuvre le procédé ci-dessus, comprenant un instrument optoélectronique, muni de moyens de détection de ligne de visée par rapport à une référence, fournissant des images numériques.

Les caractéristiques ci-dessus ainsi que d'autres apparaîtront mieux à la lecture de la description qui suit de modes particuliers de réalisation donnés à titre d'exemples non limitatifs. La description se réfère aux dessins qui l'accompagnent, dans lesquels :

la figure 1 est un synoptique simplifié de la chaîne de traitement d'images dans son ensemble;
- la figure 2 est un synoptique de l'extraction de vignette, qui constitue une étape optionnelle ;
- la figure 3 est un synoptique de traitement hybride spatio-temporel anti-repliement ;
- la figure 4 est un synoptique des opérations de registration et de la suppression qui interviennent dans le synoptique de la figure 3 ;
- la figure 5 est un synoptique d'estimation hybride simple des fonds dans un repère fixe stabilisé;
- la figure 6 est un synoptique d'estimation hybride avancée des fonds dans un repère fixe stabilisé
- la figure 7, déjà mentionnée, est un synoptique simplifié d'une chaîne de traitement d'images d'un type décrit complètement dans la demande FR 01 14934
- la figure 8 est un synoptique du traitement spatio-temporel anti-repliement de la figure 7 ;
- la figure 9 est un synoptique des opérations de registration et de la suppression qui interviennent dans le synoptique de la figure 8.

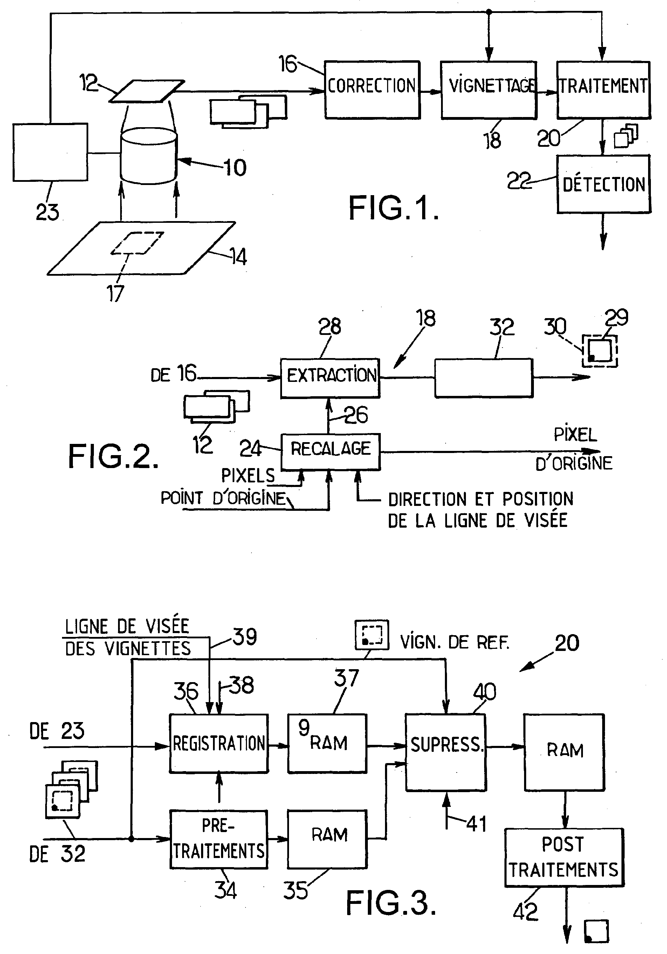

L'architecture générale d'une chaîne de traitement suivant l'invention est indiquée en figure 1. Un instrument optoélectronique 10 fournit des images "brutes" successives 12 en 2D d'une scène 14, sous forme d'une matrice à deux dimensions de pixels codés chacun sur N bits (N étant un entier supérieur à 1).L'image peut notamment être obtenue à l'aide d'un détecteur matriciel de type CCD ou à matrice de pixels actifs.

La partie traitement de la chaîne représentée à titre d'exemple en figure 1 peut être regardée comme comportant successivement:

- un module 16 de correction radiométrique, fournissant des images corrigées, qui sera quelquefois omis,
- un module de vignettage 18, permettant d'extraire des vignettes contenant la représentation de la zone d'intérêt 17,
- un module de traitement hybride 20 qui est un élément essentiel de l'invention.

L'exemple donné ici incorpore, dans le cas d'un traitement portant sur une séquence d'images, un traitement spatio-temporel du genre décrit dans la demande FR 0114934 à laquelle on pourra se reporter.

Les vignettes filtrées fournies par le module 20 sont ensuite utilisables pour la détection de cible qui peut être effectuée par des moyens classiques 22.

Les modules sont pilotés par un organe de gestion non représenté, qui fournit également une information de date. La localisation de chaque pixel dans un référentiel lié à l'instrument est assurée par des données accompagnant les images brutes.

La mise en oeuvre de l'invention exige la présence de moyens 23 de restitution de la ligne de visée de l'instrument 10. Ces moyens peuvent être de type classique. En particulier ils peuvent être constitués par des gyromètres. Dans le cas d'un instrument monté sur un véhicule spatial et notamment sur un satellite, ils peuvent être constitués ou complétés par un jeu de capteurs optiques (capteurs stellaires et capteurs d'horizon terrestre par exemple). Ces moyens doivent, surtout dans le cas du traitement d'une image isolée, permettre une estimation du filé interne.

Des constitutions possibles de différents modules montrés en figure 1 seront maintenant décrites.

Module de correction radiométriciue

Le module 16 ne sera prévu que dans certains cas et notamment lorsque les caractéristiques de l'instrument l'exigent. Il a pour rôle de compenser les écarts de réponse des sites de détection de capteur de l'instrument 10. Souvent il applique au signal de sortie de chaque site de simples corrections de biais (ou "offset") et de gain, par une loi polynomiale.

Module de vignettage

Le module 18, qui sera également omis dans certains cas, a pour fonction de sélectionner une fraction de l'image ou de chaque image d'origine, dite "vignette", qui cadre au mieux avec une zone d'intérêt définie dans un référentiel lié à la scène observée et d'effectuer une pondération réduisant les effets de bord. Le vignettage peut être réalisé par des circuits spécifiques disponibles dans le commerce sous forme d'ASIC ou par un traitement informatique de type réalisable par des programmes actuellement disponibles.

Dans le cas schématisé sur la figure 2, le module 18 effectue plusieurs opérations successives, dont certaines peuvent être omises.

Une première opération 24 consiste à déterminer des paramètres permettant de recaler les vignettes avec la zone d'intérêt dans la scène. Elle utilise pour cela des informations externes sur un point d'origine de la vignette à extraire (par exemple un coin) dans la scène, la position et l'attitude de l'instrument et des données de datation et de localisation des pixels. Cette étape fournit en 26 l'adresse d'un pixel d'origine dans l'image en cours. La seconde opération est l'extraction 28 d'une vignette utile rectangulaire 29 et d'une bordure 30 qui permettra de réduire les effets de bord. Si la vignette utile a une taille de Mu x Nu pixels, la vignette complète extraite aura une tailler de (Mu + 2.Mb)(Nu + 2Nb) pixels. Mb et Nb sont généralement inférieurs à 10 pour des tailles de vignette utile jusqu'à 100 x 100 pixels.

La troisième étape illustrée est une pondération 32, qui peut être de type classique (par fenêtre de Hanning par exemple) destinée à réduire les effets de bord.

On dispose ainsi, en sortie du module 18,d'une vignette 29 ou d'une succession de vignettes extraites, recalées mutuellement, avec indication de leur pixel d'origine.

Module de traitement hybride (figure 3)

Le module 20 peut présenter des constitutions très diverses.

Dans tous les cas, il réalise une désensibilisation aux effets de l'imprécision sur la localisation d'une image et de flou éventuel (mouvement intra-image) et , en cas de plusieurs images, il restitue les mouvements inter-images provoqués par l'instabilité de la ligne de visée et les mouvements propres des fonds.

Souvent il aura de plus une fonction de désensibilisation aux effets des repliements de spectre imposés par l'instrument 10, grâce à des traitements spatio-temporels au cours d'opérations de registration et de suppression de fond anti-repliement.

Dans tous les cas, le module 20 hybride, pour la suppression des fonds et, pour la registration inter-image, un traitement au moins spatial sur une image courante sélectionnée et une image de référence) ou spatio-temporel et l'utilisation d'informations sur la ligne de visée et notamment sur son orientation par rapport à un repère fixe. En résumé, le module 20 mettra en oeuvre un procédé de projection d'une image ou de plusieurs images successives dans un repère fixe, dans des conditions maîtrisées de ligne de visée.

On appellera par la suite "hybridation simple" un procédé mis en oeuvre sur une seule image, ce procédé étant utilisable lorsque les repliements de spectre sont nuls ou faibles.

On appellera "hybridation avancée d'une séquence d'images" un procédé mettant en oeuvre toute une séquence d'images , et notamment un procédé constituant une évolution de ceux décrits dans la demande de brevet français N° 0114934 déjà mentionnée, ce procédé étant utilisable même en cas de repliement total de spectre.

Toutes les variantes d'hybridation qui seront maintenant décrites sont 5 utilisables aussi bien dans une chaîne spatio-temporelle classique que dans les chaînes de traitement suivant la demande de brevet antérieur, exception faite de

- en ce qui concerne la registration des images l'hybridation simple dans le cas de la variante dite "star-haute résolution" et,
- en ce qui concerne la suppression des fonds, l'hybridation simple avec les chaînes STAR moyenne et haute résolutions, décrites dans la demande de brevet français N°01 14934.

Ces traitements peuvent fonctionner nominalement en mode "pipe-line", ce qui minimise la puissance de calcul nécessaire.

Y compris lorsque la chaîne de traitement travaille sur une séquence d'images on peut la regarder comme comportant

- des pré-traitements 34 sur les vignettes complètes extraites, (provenant de l'opération 32), dont le résultat est stocké temporairement dans une mémoire de travail 35,
- une registration anti-repliement 36 des vignettes, utilisant une information 38 donnant les décalages possibles et une information 39 donnant la ligne de visée des vignettes extraites, par rapport à une vignette de référence, registration dont le résultat est stocké en 37,
- une suppression de fond anti- repliement 40 sur la vignette de référence i à chaque séquence, utilisant une information 41 mémorisée sur la ligne de visée pour la vignette de référence,
- des post-traitements 42 sur les vignettes de référence, fournissant les vignettes utiles filtrées successives.

Ces opérations peuvent s'effectuer soit en restant dans l'espace direct, soit en passant dans l'espace fréquentiel.

Les pré-traitements 34 préparent les vignettes extraites en vue des opérations effectuées lors de la registration et de la suppression du fond. Les post-traitements 42 travaillent les vignettes filtrées avant diffusion aux traitements situés en aval.

Les pré-traitements 34 peuvent comporter des éventuelles transformées de Fourier (TFD directe ou inverse), des extractions d'amplitude et de phase.

Les post-traitements 42 peuvent comporter des transformations inverses de Fourier ainsi que des traitements de pondération temporelle, de filtrage spatial et d'élimination de la bordure des vignettes filtrées

La registration anti-repliement 36 a pour objectif de restituer, malgré les repliements, les décalages inter-images.

La suppression de fond anti-repliement 40 a pour objectif de supprimer, malgré les mouvements apparents, les fonds présents dans une vignette de référence en exploitant les vignettes registrées fournies par la registration anti-repliement 36.

Ces opérations seront successivement décrites dans deux cas :

- hybridation simple, sur une seule image, utilisable lorsque les repliements de spectre sont nuls ou partiels,
- hybridation avancée, sur une seule image, utilisable même lorsque les repliements de spectre sont complets.

**Registration**

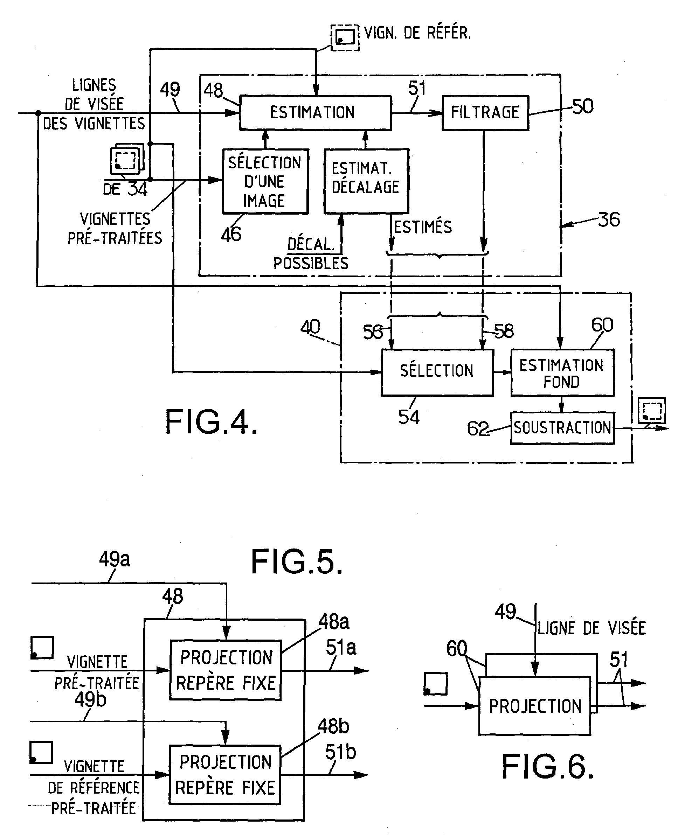

La registration 36 (figure 4) estime les décalages inter-images en exploitant, après un filtrage anti-repliement éventuel, les informations du fond non polluées par le repliement et estimées sur un support fréquentiel éventuellement étendu.

1- Hybridation simple de la registration

L'hybridation simple permet de traiter une image à la fois, pour effectuer sa registration par rapport à une référence.

La registration 36 est destinée à ramener les informations de l'image de référence et celle de l'image sélectionnée dans un repère commun stationnaire. Ce repère stationnaire peut avoir diverses natures :

- le repère peut être fixe ou lié à une image, en particulier à l'image de référence,
- les caractéristiques en orientation de la ligne de visée dans le repère peuvent être stabilisées soit pour arriver à un flou nul ou minimal , soit pour les maîtriser de façon à créer un flou volontaire tel que le flou global de chaque image à son tour soit stationnaire.

Ces divers modes d'obtention d'un repère stationnaire peuvent être résumés comme comportant quatre cas ; tous maintiennent la possibilité de registration.

- registration dans un repère fixe stabilisé
- registration dans un repère image stabilisé
- registration dans un repère fixe rendu flou
- registration dans un repère image rendu flou.

L'architecture d'ensemble est similaire dans tous les cas.

Dans le cas d'hybridation simple, les opérations de base de la registration 36 sont montrées en figure 4 dans le cas de travail dans l'espace naturel ou fréquentiel. Elles comportent :

- Une étape 46 de sélection de l'image (ou de la vignette) à registrer par rapport à l'image de référence
- Une étape 48 d'estimation hybride du fond, appliquée à l'image sélectionnée et à l'image de référence (ou aux vignettes)
- Une étape optionnelle 50 de filtrage anti-repliement,
- Une étape 52 d'estimation du décalage de l'image sélectionnée par rapport à l'image de référence.

L'étape 48 d'estimation du fond par un processus hybride est légèrement différente suivant que le repère choisi est fixe ou qu'il est lié à une image et suivant que les conditions de lignes de visée sont stabilisées ou maîtrisées.

La figure 5 montre schématiquement le cas du processus dans le cas d'un repère fixe et d'une stabilisation de la ligne de visée. En 48a et 48b, il y a respectivement projection de la vignette courante prétraité et de la vignette de référence prétraitée dans le repère fixe stabilisé grâce aux informations, reçues en 49a et 49b, respectivement sur la ligne de visée de la vignette courante prétraitée et de la vignette de référence. On obtient ainsi en sortie, en 51a et 51b, le fond estimé et l'image de référence dans le repère fixe stabilisé.

Ces informations sont fournies en 51 (figure 4) à l'étape de filtrage 50. Le processus est très similaire dans le cas de la projection dans un repère image, plutôt que dans un repère fixe, à la seule différence que les étapes 48a et 48b exigent la réception dans un repère image stabilisé.

Dans des conditions maîtrisées de ligne de visée, la projection s'effectue dans un repère flou qui peut être un repère fixe flou ou un repère image flou (opérations 48a et 48b de la figure 5).

### 2. Hybridation avancée de la registration

L'hybridation avancée de la registration intègre, dans les processus, une estimation hybride des fonds mettant en oeuvre un traitement spatio-temporel pouvant constituer une évolution des procédés STAR tels que défini dans la demande de brevet FR 0114934 déjà mentionnée.

Un intérêt de cette solution consiste à ce que le traitement s'effectue sur un support fréquentiel étendu. Comme dans le cas de l'hybridation simple, l'estimation avec hybridation avancée permet d'exprimer les fonds dans un repère fixe ou un repère d'image aussi bien que dans des conditions stabilisées ou simplement maîtrisées.

Le synoptique de l'hybridation hybride est e même que celui montré en figure 4, mais l'étape 48 d'estimation des fonds est différente.

Il y a encore sélection 46 des images à registrer par rapport à l'image de référence, estimation hybride des fonds (mais cette fois appliquée à l'ensemble des images sélectionnées associées à l'image de référence). Le filtrage anti-repliement passe bas 50 et l'estimation du décalage entre l'image de référence et les images sélectionnées subsistent.

A titre d'exemple, la figure 6, montre le synoptique de traitement dans un repère fixe avec ligne de visée stabilisée. Les indications sur l'orientation de la ligne de visée des vignettes prétraitées et de la vignette de référence sont appliquées en 49. Le traitement effectué par l'opérateur 60 est constitué par une projection de type STAR dans le repère fixe stable fourni par la ligne de visée. Les vignettes courantes prétraitées et la vignette de référence sont fournies à l'opérateur 60 et l'opération donne encore en sortie 51 les fonds estimés, dans un repère fixe stabilisé.

Les opérations sont directement comparables, sauf en ce qui concerne la nature du repère, en cas de repère fixe flou, de repère image stable et de repère image flou.

**Suppression des fonds**

### 1. Hybridation simple

L'étape 40 de suppression des fonds, également schématisée en figure 4, implique d'estimer, puis de soustraire, dans chaque vignette prétraitée, le fonds préalablement estimé, éventuellement dans un domaine spectral étendu. Il y a successivement:

- une sélection 54 d'une vignette parmi les vignettes prétraitées utilisant la sortie de la registration 36 (vignette prétraitée et non repliée 56 et décalage estimé 58),
- une étape d'estimation hybride des fonds appliquée à l'image ou vignette sélectionnée et à l'image de référence, utilisant l'information 49 sur la ligne de visée des vignettes registrées,

- une étape de soustraction du fonds 62 fournissant une vignette filtrée. Cette architecture est valable dans le domaine fréquentiel aussi bien que dans l'espace spatial naturel.

2. Hybridation avancée

La suppression des fonds avec hybridation avancée se différencie de la mise en oeuvre avec hybridation simple par le mode d'estimation des fonds 60, qui fait appel à un processus du genre STAR décrit dans la demande FR 0114934.

On décrira maintenant diverses architecture de mise en oeuvre de l'étape de suppression hybride des fonds, l'estimation hybride des fonds pouvant être similaire à celles mises en oeuvre sous la dénomination STAR pour la registration hybride avancée.

De façon générale, l'hybridation de la chaîne image utilise :

- soit la projection d'une image dans un repère fixe ou image (hybridation simple),
- soit les projections de plusieurs images (hybridation avancée),

dans un repère fixe ou un repère d'images, avec une ligne de visée stabilisée ou maîtrisée.

On envisagera successivement par la suite la projection d'une seule image (qui ne peut mettre en oeuvre un traitement spatio-temporel complet du genre décrit dans la demande de brevet français déjà mentionnée) et la projection de plusieurs images qui autorise un traitement spatio-temporel.

Hybridation simple: Cas d'une seule image dans un repère fixe stabilisé

En l'absence de repliement, le but recherché est de compenser les effets de l'instabilité de la ligne de visée sur l'image, se traduisant par une non coïncidence entre la ligne de visée sur une image courante et une ligne de visée de référence. Cette projection s'effectuera généralement par filtre inverse, en utilisant le développement limité des instabilités de la ligne de visée autour de la date moyenne d'intégration de l'image par l'instrument opto-électronique.

Ce développement limité peut être arrêté à : l'ordre zéro, qui prend en compte le décalage de la ligne de visée selon deux axes orthogonaux x et y de l'image, permettant de compenser les écarts deux images, l'ordre 1, permettant de compenser le filé de la ligne de visée selon les axes x et y l'ordre 2, permettant de compenser l'accélération de la ligne de visée selon les axes x et y

Il n'y a généralement pas lieu de dépasser l'ordre 2.

La compensation implique de disposer d'informations suffisantes pour définir le mouvement de la ligne de visée en fonction du temps, par exemple sous forme des différents ordres d'un développement limité et à condition que les instabilités de la ligne de visée ne génèrent pas de zéros dans la bande utile de la fonction de transfert de la chaîne image.

Dans la pratique, la plupart des instruments ne permettent pas d'obtenir des informations d'ordre supérieur à 1. La projection d'images dans un repère fixe stabilisé permet alors de compenser le décalage et le filé. L'absence de zéros, nécessaire pour utiliser l'ordre 2, imposerait un filé limité;

En présence de zéros, il est possible d'utiliser, au lieu d'un filtrage inverse classique, un filtrage de Wiener.

On s'attachera maintenant à l'emploi d'un filtre inverse, appliqué aux ordres 1 et 2, et cela à titre d'exemple.

Le décalage entre le repère fixe et le repère de l'image provoque un déphasage proportionnel à la fréquence, qui peut s'écrire

$$\Phi(fx,fy) = 2*pj*(\delta x*fx + \delta y*fy),$$

où fx et fy sont les fréquences selon les axes x et y de l'image et ($\delta x$, $\delta y$) est le décalage à compenser sur les axes x et y

Les amplitudes du filtre dépendent notamment des filés à compenser.

Le filé provoque une atténuation des fréquences par une loi de type sinus cardinal, qui fixera les amplitudes du filtre.

$$A(fx,fy) = sinc (pi*(\Delta x*fx +\Delta y*fy))$$

où fx et fy sont les fréquences selon les axes x et y de l'image et ($\Delta x$, $\Delta y$) est le filé durant le temps d'intégration, à compenser suivant les axes x et y.

Dans le cas d'une projection intégrant les ordres O et 1 de la fonction de la ligne de visée, la synthèse théorique simplifiée est immédiate dans le domaine fréquentiel. Par exemple dans le cas d'un filtre inverse

- La phase du filtre inverse est la conjuguée du déphasage induit par le décalage

$$\Phi(fx,fy) = -2*pi*(\delta x*fx + \delta y*fy)$$

- L'amplitude du filtre inverse est l'inverse de l'atténuation induite par le filé

$$A(fx,fy) = 1/sinc (pi*(\Delta x*fx +\Delta y*fy))$$

Le filtre inverse peut être remplacé par un filtre expérimental à réponse impulsionnelle finie, dans l'espace spatial naturel, synthétisé de façon semi-analytique et semi-numérique.

L'approche ci-dessus peut être généralisée à une projection d'ordre quelconque, ajustée par synthèse expérimentale, comme schématisé sur la figure 7.

Dans le cas d'un repère image stabilisé, la projection d'une seule image utilise la même approche que ci-dessus, avec simplement modification du repère de projection.

Dans le cas d'un repère fixe rendu flou, on reprend l'approche ci-dessus, simplement en modifiant les conditions de ligne de visée recherchée.

Enfin, dans le cas d'un repère image rendu flou, la projection d'une seule image dans des conditions maîtrisées de ligne de visée est une duplication de la projection dans un repère fixe rendu flou, si ce n'est qu'on modifie le repère de projection en adaptant le décalage à compenser pour ramener les informations dans le repère image souhaité.

Hybridation avancée utilisant plusieurs images et un traitement spatio-temporel STAR.

L'adjonction d'un traitement spatio-temporel permet de pallier les insuffisances du traitement d'une seule image, lorsque le repliement du spectre est important.

L'approche adoptée consiste à compenser les effets des instabilités de la ligne de visée sur un support fréquentiel étendu, obtenu par fusion d'images. Il faut alors traiter simultanément le dépliage de l'espace fréquentiel étendu et la compensation des amplitudes et des phases altérées par l'instabilité de la ligne de visée;

Dans la pratique, le traitement spatio-temporel, impliquant la projection de plusieurs images, se traduit par plusieurs filtres appliqués à chaque image et adaptés de façon globale à l'ensemble des instabilités de ligne de visée à compenser, par filtre inverse ou filtre de Wiener;

Les caractéristiques des filtres dans l'espace fréquentiel sont définis de façon analytique par la même logique que pour une seule image, si ce n'est qu'il faut réaliser simultanément le dépliage des supports que l'on veut étendre et la compensation des effets des instabilités de la ligne de visée.

Les filtres peuvent également être synthétisés de façon expérimentale sur support spatial fini, comme dans le cas de la projection d'une seule image.

**Revendications**

1. Procédé de traitement d'une image ou d'images successives d'une scène comportant un fond structuré, suivant lequel :

on effectue, sur chaque image ou séquence d'images, un traitement de registration anti-repliement à partir d'une estimation de fond et d'indication du décalage de la ligne de visée d'une image courante par rapport à une référence fixe ou correspondant à la ligne de visée de l'image de référence, et
on effectue, sur l'image registrée, une opération de suppression de fond anti repliement par une nouvelle estimation de fond et soustraction en exploitant l'information sur le décalage de la ligne de visée de l'image courante.

2. Procédé de traitement selon la revendication 1, **caractérisé en ce que** le traitement comporte une étape préalable de vignettage (18) pour extraire une vignette de dimensions inférieures à celles de l'image pour contenir la représentation d'une zone d'intérêt dans l'image ou chacune des images.

3. Procédé selon la revendication 1 ou 2, suivant lequel on prend en compte les informations sur les déplacements de la ligne de visée au cours de la prise de vue d'une image afin de faire une évaluation du filé.

4. Procédé de traitement selon la revendication 1, 2 ou 3, **caractérisé en ce que** la registration anti-repliement (40) comporte:

   - une étape (46) de sélection des images utilisées lors de l'estimation du fond,
   - une étape d'estimation hybride du fond, utilisant une projection de l'image ou de la vignette courante et de l'image ou la vignette de référence dans un repère fixe ou d'un repère d'image stabilisé utilisant les indications concernant la ligne de visée de l'image ou vignette courante et de l'image ou vignette de référence,
   - et une étape (52) destination du décalage de l'image ou vignette courante par rapport à l'image ou vignette de référence.

5. Procédé de traitement selon la revendication 1, 2 ou 3, **caractérisé en ce que** l'étape (40 de suppression des fonds comporte:

   - une sélection (54) d'une vignette ou image parmi les vignettes ou images registrées (36),
   - une estimation hybride des fonds appliquée à l'image ou vignette sélectionnée et à l'image de référence, utilisant l'information 49 sur la ligne de visée des vignettes registrées,
   - une étape de soustraction des fonds (62) fournissant une vignette ou image filtrée.

6. Procédé de traitement selon la revendication 5, **caractérisé en ce que** l'estimation des fonds (60) fait de plus appel à un traitement spatio-temporel

7. Procédé de traitement selon la revendication 5 ou 6, **caractérisé en ce que** la suppression hybride des fonds fait appel :

- soit à la projection d'une image dans un repère fixe ou image
- soit aux projections de plusieurs images

dans un repère fixe ou un repère d'images, avec une ligne de visée stabilisée ou maîtrisée.

8. Procédé de traitement selon la revendication 5 ou 7, **caractérisé en ce que**, en l'absence de repliement, pour compenser les effets de l'instabilité de la ligne de visée sur l'image, se traduisant par une non coïncidence entre la ligne de visée sur une image courante et une ligne de visée de référence, la projection est effectuée par filtre inverse, en utilisant le développement limité des instabilités de la ligne de visée autour de la date moyenne d'intégration de l'image par l'instrument optoélectronique, arrêté à l'ordre zéro, 1 ou 2.

9. Procédé de traitement selon la revendication 5, 6 ou 7, **caractérisé en ce que** la projection est effectuée par filtre de Wiener

10. Dispositif de traitement d'une image ou d'images successives d'une scène comportant un fond structuré, comprenant un instrument opto-électronique dont l'organe photosensible est constitué par une matrice à deux dimensions de sites photosensibles, muni de moyens fournissant des indications permettant de restituer à tout moment la ligne de visée de l'image ou de chaque image, l'instrument optoélectronique étant d'un type fournissant des images numériques ou étant associés à un convertisseur analogique-numérique, **caractérisé en ce qu'**il comporte:

- des moyens pour effectuer, sur chaque image ou séquence d'images, un traitement de registration anti-repliement à partir d'une estimation de fond et d'indication du décalage de la ligne de visée d'une image courante par rapport à une référence fixe ou correspondant à la ligne de visée d'une image de référence, et
- des moyens pour effectuer, sur l'image registrée, une opération de suppression de fond anti-repliement par une nouvelle estimation de fond et soustraction en exploitant l'information sur le décalage de la ligne de visée de l'image courante.

FIG.1.

FIG.2.

FIG.3.

VIGN. DE RÉFÉR.

LIGNES
DE VISÉE
DES VIGNETTES

49

48

ESTIMATION

51

FILTRAGE

50

DE 34

SÉLECTION
D'UNE
IMAGE

ESTIMAT.
DÉCALAGE

VIGNETTES
PRÉ-TRAITÉES

46

DÉCAL.
POSSIBLES

ESTIMÉS

36

40

56

58

60

SÉLECTION

ESTIMATION
FOND

**FIG.4.**

54

62

SOUSTRACTION

**FIG.5.**

49a

48

48a

51a

VIGNETTE
PRÉ-TRAITÉE

PROJECTION
REPÈRE FIXE

49b

48b

51b

VIGNETTE
DE RÉFÉRENCE
PRÉ-TRAITÉE

PROJECTION
REPÈRE FIXE

49

LIGNE DE VISÉE

60

51

PROJECTION

**FIG.6.**

VIGNETTAGE 118 120

122

FIG.7.

120

VIGN. DE REF.

136 138 120 140

RAM RAM

DE 18 134 135

142

FIG.8.

FIG.9.

EP 1 429 289 A1

**Office européen des brevets**

**RAPPORT DE RECHERCHE EUROPEENNE**

Numéro de la demande

EP 02 29 3073

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| E | EP 1 318 476 A (ASTRIUM SAS) 11 juin 2003 (2003-06-11) * page 2, ligne 9-16 * --- | 1-10 | G06T5/50 G06T7/00 G06T5/00 G06T7/20 |
| Y | US 6 320 611 B1 (PEPIN CHRISTIAN) 20 novembre 2001 (2001-11-20) * abrégé * * colonne 5, ligne 64; figures 1,5 * * colonne 6, ligne 34 - ligne 60 * --- | 1,10 | |
| Y | US 5 109 435 A (LO THOMAS K ET AL) 28 avril 1992 (1992-04-28) * abrégé * * figure 4 * --- | 1,10 | |
| A | KIM S P ET AL: "SUBPIXEL ACCURACY IMAGE REGISTRATION BY SPECTRUM CANCELLATION" IMAGE AND MULTIDIMENSIONAL SIGNAL PROCESSING. MINNEAPOLIS, APR. 27 - 30, 1993, PROCEEDINGS OF THE INTERNATIONAL CONFERENCE ON ACOUSTICS, SPEECH, AND SIGNAL PROCESSING (ICASSP), NEW YORK, IEEE, US, vol. 5, 27 avril 1993 (1993-04-27), pages V-153-V-156, XP000437640 ISBN: 0-7803-0946-4 * page V-153, alinéa 1 * --- | 1,10 | |
| A | JINCH H ET AL: "FAST FEATURE MATCHING USING RANDOM FIELD MODELS FOR IMAGE REGISTRATION" INTERNATIONAL JOURNAL OF ELECTRONICS, TAYLOR AND FRANCIS.LTD. LONDON, GB, vol. 76, no. 3, 1 mars 1994 (1994-03-01), pages 385-401, XP000443328 ISSN: 0020-7217 * figure 1 * --- | 1,10 | |

DOMAINES TECHNIQUES RECHERCHES (Int.Cl.7)

G06T

-/--

Le présent rapport a été établi pour toutes les revendications

| Lieu de la recherche | Date d'achèvement de la recherche | Examinateur |
|---|---|---|
| LA HAYE | 15 septembre 2003 | Chateau, J-P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................
& : membre de la même famille, document correspondant

EPO FORM 1503 03.82 (P04C02)

14

EP 1 429 289 A1

**Office européen des brevets**

**RAPPORT DE RECHERCHE EUROPEENNE**

Numéro de la demande

EP 02 29 3073

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | HARDIE R C ET AL: "JOINT MAP REGISTRATION AND HIGH-RESOLUTION IMAGE ESTIMATION USING A SEQUENCE OF UNDERSAMPLED IMAGES"<br>IEEE TRANSACTIONS ON IMAGE PROCESSING, IEEE INC. NEW YORK, US,<br>vol. 6, no. 12,<br>1 décembre 1997 (1997-12-01), pages 1621-1632, XP000724630<br>ISSN: 1057-7149<br>* page 1621, colonne de gauche, ligne 1 - ligne 20 *<br>---<br> | 1,10 | |
| A | SCHAUM A: "OPTIMAL CHANGE DETECTION IN MISREGISTERED IMAGE SEQUENCES,"<br>PROCEEDINGS OF THE SPIE, SPIE, BELLINGHAM, VA, US,<br>vol. 2103, 13 octobre 1993 (1993-10-13), pages 20-29, XP000562408<br>* page 20, alinéa 1 *<br>* page 24, alinéa 4 - page 25, alinéa 5 *<br>----- | 1,10 | DOMAINES TECHNIQUES RECHERCHES (Int.Cl.7) |

Le présent rapport a été établi pour toutes les revendications

| Lieu de la recherche | Date d'achèvement de la recherche | Examinateur |
|---|---|---|
| LA HAYE | 15 septembre 2003 | Chateau, J-P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 29 3073

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-09-2003

| Document brevet cité au rapport de recherche | | Date de publication | Membre(s) de la famille de brevet(s) | | Date de publication |
|---|---|---|---|---|---|
| EP 1318476 | A | 11-06-2003 | FR | 2832527 A1 | 23-05-2003 |
| | | | EP | 1318476 A1 | 11-06-2003 |
| US 6320611 | B1 | 20-11-2001 | FR | 2752619 A1 | 27-02-1998 |
| | | | DE | 69702070 D1 | 21-06-2000 |
| | | | DE | 69702070 T2 | 02-11-2000 |
| | | | DK | 920677 T3 | 02-10-2000 |
| | | | EP | 0920677 A1 | 09-06-1999 |
| | | | WO | 9808193 A1 | 26-02-1998 |
| US 5109435 | A | 28-04-1992 | AU | 612503 B2 | 11-07-1991 |
| | | | AU | 3868389 A | 05-03-1990 |
| | | | CA | 1315872 C | 06-04-1993 |
| | | | DE | 68919205 D1 | 08-12-1994 |
| | | | DE | 68919205 T2 | 23-03-1995 |
| | | | EP | 0381724 A1 | 16-08-1990 |
| | | | ES | 2015194 A6 | 01-08-1990 |
| | | | IL | 91072 A | 31-01-1993 |
| | | | JP | 7038226 B | 26-04-1995 |
| | | | JP | 3502016 T | 09-05-1991 |
| | | | KR | 9306386 B1 | 14-07-1993 |
| | | | NO | 901530 A | 04-04-1990 |
| | | | TR | 25260 A | 02-12-1992 |
| | | | WO | 9001748 A1 | 22-02-1990 |

EPO FORM P0460

Pour tout renseignement concernant cette annexe : voir Journal Officiel de l'Office européen des brevets, No.12/82